# FASCICULE DE BREVET EUROPEEN

(11) **EP 1 261 226 B1**
(45) Date de publication et mention de la délivrance du brevet: **23.01.2013**
(21) Numéro de dépôt: 02291104.4
(22) Date de dépôt: 02.05.2002
(51) Int. Cl.: H04B 7/185

(54) **Systeme de telecommunication du type mf-tdma et terminal pour un tel systeme**
MF-TDMA-Telekommunikationssystem und Endgerät
MF-TDMA telecommunication system and terminal for such a system

(30) Priorité: 22.05.2001 FR 0106722
(43) Date de publication de la demande: 27.11.2002
(73) Titulaire: Alcatel Lucent, 75007 Paris (FR)
(72) Inventeur: Niddam, David, 31830 Plaisance Du Touch, Toulouse (FR); Pirio, Stephane, 92500 Rueil-Malmaison (FR)
(74) Mandataire: Sciaux, Edmond

(56) Documents cités:
- DE-A- 19 704 907
- DE-A- 19 919 513
- US-A- 5 073 900

## Description

L'invention est relative à un système de télécommunication, notamment par satellite transparent.

Pour transmettre simultanément une multiplicité de communications de type numérique, on sait qu'on peut utiliser divers types de ressources en communication, notamment des fréquences et des intervalles de temps.

La transmission de type MF-TDMA (Multifrequency-Time Division Multiple Access), qui utilise simultanément une multiplicité de fréquences et des intervalles de temps, permet un débit important de données. C'est pourquoi, elle est utilisée dans la norme DVB-RCS, en cours d'élaboration, qui concerne la transmission de données numériques vidéo par l'intermédiaire de satellites.

Dans un tel système de télécommunication, chaque porteuse, de fréquence déterminée, présente un nombre donné d'intervalles de temps par trame, ce nombre d'intervalles de temps étant égal à l'unité ou à une puissance de deux.

Les messages sont transmis par supertrames contenant un nombre déterminé de trames. Une trame comprend un nombre déterminé de porteuses et est transmise pendant un temps déterminé et une supertrame s'étend sur un nombre N de durées de trames et comporte un nombre N₁ de porteuses.

Au cours d'une trame, un même message peut être transmis sur plusieurs porteuses de types différents, c'est-à-dire avec des intervalles de temps de durées différentes.

Les communications peuvent s'effectuer en "étoile", c'est-à-dire d'un terminal vers une station de base. En d'autres termes, un terminal communique avec un autre terminal par l'intermédiaire de la station de base. Il est également possible d'effectuer des communications directement entre terminaux sans passer par la station de base. Ce type de communication est appelé "maillé". Il est possible aussi de combiner les communications en étoile et les communications maillées, voir, par example, DE-A1-197 04 907.

On a constaté que dans un tel système de télécommunication les sauts de fréquences pour un même terminal peuvent présenter des valeurs importantes, ce qui rend relativement complexe la réalisation des terminaux d'un tel système de télécommunication.

L'invention a pour but de permettre une connectivité totale (connexion en étoile et maillée) en utilisant des terminaux ayant des performances limitées en terme de saut de fréquence en émission et en réception, ces terminaux utilisant le mode MF-TDMA en émission et en réception.

L'invention fait donc appel à des terminaux équpés d'au moins un modulateur MF-TDMA pour les émissions en étoile (vers une station de base) ou en maillé (vers d'autres terminaux) et d'un démodulateur MF-TDMA pour la réception en maillé (en provenance des autres terminaux)..

On prévoit de séparer la bande de fréquences allouée au système en deux parties, et de répartir les terminaux en deux groupes, de façon telle que le premier groupe puisse émettre dans la première partie de la bande de fréquences et le second groupe puisse émettre dans la seconde partie de la bande de fréquences, chaque partie de la bande de fréquence étant elle-même divisée en deux sous-bandes dont l'une est destinée à l'émission de type étoile et l'autre à l'émission de type maillé, les sous-bandes destinées à l'émission de type maillé étant adjacentes et l'ensemble de ces deux sous-bandes destinées à l'émission de type maillé étant également utilisé pour la réception de type maillé.

Ainsi, dans chaque groupe de terminaux, les sauts de fréquences sont limités, pour l'émission, à la partie de la bande attribuée à ce groupe et, pour la réception, les sauts de fréquences sont limités aux deux sous-bandes centrales adjacentes.

De préférence, les deux parties de la bande sont égales. De même, il est préférable que les sous-bandes centrales attribuées à la réception de type maillé soient toutes les deux de même largeur.

Cependant, les deux sous-bandes de chaque partie peuvent être inégales. Par exemple, la largeur de la sous-bande attribuée à l'émission de type étoile peut être sensiblement supérieure à la largeur de la sous-bande attribuée à l'émission de type maillé.

Dans un exemple, la largeur de l'ensemble des deux sous-bandes centrales est inférieure à la largeur de chacune des sous-bandes attribuées à l'émission de type étoile.

On prévoira, en général, que la bande totale du système comprenant les émissions en étoile et en maillé correspondra au moins à deux fois la bande émission d'un terminal et que la bande totale en réception de type maillé correspondra à la bande de réception d'un terminal.

L'invention concerne non seulement le système de télécommunication dans son ensemble mais également les divers constituants de ce dernier, notamment une station de base et chacun des terminaux disposant d'au moins d'un modulateur MF-TDMA et d'un démodulateur MF-TDMA.

Ainsi, l'invention conceme de façon générale un système de télécommunication, notamment par satellite transparent, dans lequel des communications numériques sont transmises en mode multifréquence et à partages de temps (MF-TDMA), ce système comprenant une pluralité de terminaux et une station de base, les communications pouvant être effectuées en étoile, par l'intermédiaire d'une station de base, ou en maillé, directement entre terminaux. Ce système est tel que les terminaux sont répartis en deux groupes et la bande de fréquences allouée au système est divisée en deux parties, la première étant prévue pour les émissions du premier groupe et la seconde pour les émissions du second groupe, chaque partie de la bande de fréquence étant divisée en deux sous-bandes, les sous-bandes centrales étant utilisées pour l'émission de type maillé et les sous-bandes d'extrémitées pour l'émission de type étoile, les deux sous-bandes centrales étant également utilisées pour la réception de type maillé pour l'ensemble des deux groupes de terminaux.

Dans une réalisation, les deux parties de la bande sont égales.

Les deux sous-bandes d'une partie de la bande peuvent présenter des largeurs inégales.

Dans ce cas, la sous-bande destinée à la réception en maillé peut présenter une largeur inférieure à la largeur de la sous-bande destinée à l'émission en étoile.

Dans cette dernière hypothèse, la largeur de l'ensemble des deux sous-bandes centrales peut être inférieure à la largeur de la plus petite largeur des bandes d'extrémités.

L'invention concerne aussi un terminal pour système de télécommunication dans lequel les communications numériques sont transmises en mode multifréquence à partage de temps (MF-TDMA) dans lequel chaque terminal peut communiquer avec les autres terminaux soit en maillé, directement de terminal à terminal, soit en étoile par l'intermédiaire d'une station de base, une bande de fréquences étant allouée au système. La bande de fréquences étant divisée en deux parties distinctes, le terminal comporte des moyens pour émettre sur une des deux parties de la bande de fréquences, cette partie étant divisée en deux sous-bandes dont l'une, la plus proche de l'autre partie, est destinée à l'émission de type maillé et dont l'autre sous-bande est destinée à l'émission de type étoile, et pour la réception de type maillé, le terminal comprend des moyens pour recevoir selon la sous-bande d'émission de type maillé et selon la sous-bande adjacente, également destinée à l'émission de type maillé, mais pour la seconde partie de la bande.

D'autres caractéristiques et avantages de l'invention apparaîtront avec la description de certains de ses modes de réalisation, celle-ci étant effectuée en se référant aux dessins ci-annexés, sur lesquels:
la figure 1 est un schéma d'un système de télécommunication MF-TDMA pouvant fonctionner tant en étoile qu'en maillé en utilisant un satellite transpartent, et
la figure 2 est un schéma montrant l'utilisation, conforme à l'invention, de la bande de fréquences utilisée par le système représenté sur la figure 1.

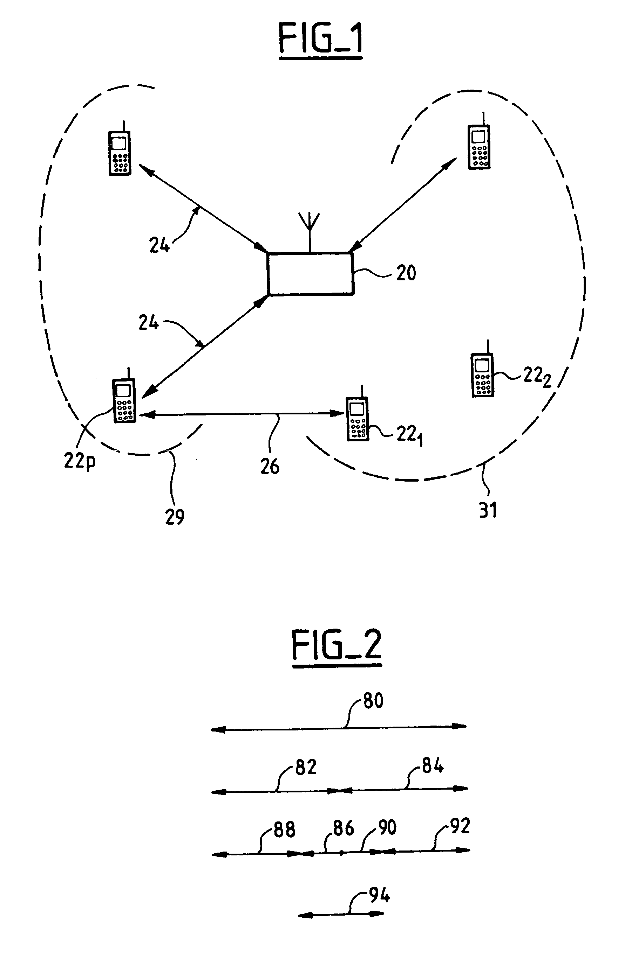

Un exemple de système de télécommunication conforme à l'invention est représenté sur la figure 1. Dans cette réalisation, toutes les communications s'effectuent par l'intermédiaire d'un satellite (non montré), notamment de type géostationnaire et transparent (c'est-à-dire formant un simple relais), et le territoire couvert par ce satellite est divisé en zones et à chaque zone est affectée une station de base 20. Dans chaque zone, on prévoit une pluralité de terminaux dont le nombre peut être très important, par exemple de l'ordre d'une centaine de milliers.

Dans ce système de télécommunication, conformément à l'invention, les terminaux 22₁, 22₂ ... 22ₚ communiquent en étoile, c'est-à-dire par l'intermédiaire de la station de base 20, comme représentée par les doubles flèches 24, ou directement de terminal à terminal, comme représenté par la double flèche 26 entre les terminaux 22₁ et 22ₚ.

Les communications s'effectuent en mode MF-TDMA. Cependant, de la station 20 vers les terminaux, les communications peuvent s'effectuer selon un mode différent.

Selon l'invention on choisit une distribution des fréquences allouées au système de télécommunications qui est telle qu'elle permette que les terminaux aient une agilité en fréquences limitée en réception et en émission, tout en permettant toutes les connexions possibles entre terminaux, tant en maillé qu'en étoile.

Par agilité limitée, on entend qu'un terminal ne peut sauter d'une fréquence à une autre que dans une plage limitée qui peut être différente en réception et en émission. Ainsi, par exemple, la capacité à effectuer des sauts de fréquences est de 20 MHz en réception et de 50 MHz en émission.

Dans l'exemple représenté sur la figure 2, la bande de fréquences attribuée aux terminaux est représentée par la ligne 80 et la largeur de cette bande est de 100 MHz.

On divise cette bande 80 de fréquences de 100 MHz en deux parties égales dans cet exemple, chaque partie correspondant à un groupe de terminaux, respectivement 29 et 31.

Pour l'émission, le premier groupe de terminaux utilise la demi-bande inférieure 82 et le second groupe 31 de terminaux utilise la demi-bande supérieure 84, chacune de ces demi-bandes ayant une largeur de 50 MHz.

Dans chacune des deux demi-bandes d'émission, 82 et 84, on prévoit deux parties inégales. Ainsi, la demi-bande 82 comporte une sous-bande 86 de largeur 10 MHz destinée aux émissions de type maillé, qui correspond aux valeurs les plus élevées de la demi-bande 82, ainsi qu'une sous-bande 88 de largeur 40 MHz destinée aux émissions de type étoile. De même, la demi-bande 84 comporte deux sous-bandes inégales, à savoir une sous-bande 90, également de largeur 10 MHz, correspondant aux plus faibles valeurs de la demi-bande 84, et une sous-bande 92 de largeur 40 MHz.

Les sous-bandes 86 et 90, qui, ensemble, forment une bande de largeur 20 MHz, sont utilisées pour l'émission de type maillé de terminal à terminal, tandis que les sous-bandes 88 et 92 sont utilisées pour les émissions de type étoile, des terminaux vers la station centrale.

Enfin, pour la réception de type maillé, on attribue l'ensemble 94 des deux sous-bandes centrales jointives 86 et 90 formant ainsi une bande de 20MHz.

On voit qu'ainsi les contraintes d'agilité en fréquences en émission sont respectées puisque, dans chaque groupe de terminaux, la bande de fréquences d'émission s'étend sur 50 MHz et la bande de réception en maillé s'étend sur 20 MHz.

Par exemple, un terminal du premier groupe pourra émettre tant en maillé qu'en étoile tout en respectant la contrainte d'agilité limitée à 50 MHz puisque dans ce premier groupe, la demi-bande 82 a une largeur de 50 MHz. De même, pour le second groupe, la demi-bande 84 a une largeur limitée à 50 MHz.

Pour les communications en maillé, un terminal du premier groupe pourra émettre vers un terminal quelconque du premier ou du second groupe, puisque sa bande d'émission de 10MHz se trouve comprise dans la sous-bande de réception 94 en maillé de 20MHz. Autrement dit, une émission choisie dans la bande 86 est une fréquence qui se trowe dans la bande de réception 94 de tous les terminaux pour les communications en maillé.

Pour les communications en étoile, un terminal du premier groupe pourra alors émettre vers la station de base sur une largeur de bande de 40MHz. Il en est de même pour un terminal de l'autre groupe. Ainsi, les terminaux des deux groupes offrent une largeur de bande de 80MHz en émission vers la station de base.

Bien qu'il soit préférable que les largeurs des sous-bandes centrales 86 et 90 soient égales, on peut cependant prévoir des largeurs inégales. Dans ce cas, les sous-bandes d'extrémité 88 et 92 pourront aussi présenter des largeurs inégales.

Par ailleurs, les nombres de terminaux des premier et second groupes pourront être variables et ces nombres pewent être égaux ou différents.

## Revendications

1. Système de télécommunication, notamment par satellite transparent, dans lequel des communications numériques sont transmises en mode multifréquence et à partages de temps (MF-TDMA), ce système comprenant une pluralité de terminaux et une station de base, les communications pouvant être effectuées en étoile, par l'intermédiaire d'une station de base (20), ou en maillé, directement entre terminaux, **caractérisé en ce que** les terminaux sont répartis en deux groupes (29, 31) et **en ce que** la bande (80) de fréquences allouée au système est divisée en deux parties (82, 84), la première étant prévue pour les émissions du premier groupe et la seconde pour les émissions du second groupe, chaque partie de la bande de fréquence étant divisée en deux sous-bandes (88, 86 ; 90, 92), les sous-bandes centrales (86, 90) étant utilisées pour l'émission de type maillé et les sous-bandes d'extrémitées pour l'émission de type étoile, les deux sous-bandes centrales étant également utilisées pour la réception de type maillé pour l'ensemble des deux groupes de terminaux.

2. Système selon la revendication 1 **caractérisé en ce que** les deux parties de la bande sont égales.

3. Système selon la revendication 1 ou 2 **caractérisé en ce que** les deux sous-bandes d'une partie de la bande sont de largeurs inégales.

4. Système selon la revendication 3 **caractérisé en ce que** la sous-bande destinée à la réception en maillé présente une largeur inférieure à la largeur de la sous-bande destinée à l'émission en étoile.

5. Système selon la revendication 4 **caractérisé en ce que** la largeur de l'ensemble des deux sous-bandes centrales est inférieure à la largeur de la plus petite largeur des bandes d'extrémités.

6. Terminal pour système de télécommunication dans lequel les communications numériques sont transmises en mode multifréquence à partage de temps (MF-TDMA) dans lequel chaque terminal peut communiquer avec les autres terminaux soit en maillé, directement de terminal à terminal, soit en étoile par l'intermédiaire d'une station de base, une bande de fréquences étant allouée au système, **caractérisé en ce que**, la bande de fréquences étant divisée en deux parties distinctes, le terminal comporte des moyens pour émettre sur une des deux parties de la bande de fréquences, cette partie étant divisée en deux sous-bandes dont l'une, la plus proche de l'autre partie, est destinée à l'émission de type maillé et dont l'autre sous-bande est destinée à l'émission de type étoile, et **en ce que** pour la réception de type maillé, le terminal comprend des moyens pour recevoir selon la sous-bande d'émission de type maillé et selon la sous-bande adjacente, également destinée à l'émission de type maillé, mais pour la seconde partie de la bande.

7. Terminal selon la revendication 6 **caractérisé en ce que** les deux parties de la bande sont égales.

8. Terminal selon la revendication 6 ou 7 **caractérisé en ce que** les deux sous-bandes sont inégales.

9. Terminal selon la revendication 8 **caractérisé en ce que** la sous-bande destinée à l'émission de type maillé est de largeur inférieure à celle de la sous-bande destinée à l'émission de type étoile.

10. Terminal selon l'une quelconque des revendications 6 à 9 **caractérisé en ce que** la bande destinée à la réception de type maillé est de largeur inférieure à la bande destinée à l'émission de type étoile.

## Claims

1. A telecommunication system, particularly a transparent satellite telecommunication system, wherein digital communications are transmitted in multi-frequency time division multiple access mode (MF-TDMA), which system comprises a plurality of terminals and a base station, the communications potentially being performed in a star configuration, by means of a base station (20), or in a mesh configuration, directly between terminals, **characterized in that** the terminals are divided into two groups (29, 31) and **in that** the frequency band (80) allocated to the system is divided into two parts (82, 84); the first being provided for the emissions of the first group, and the second for emissions of the second group, each part of the frequency band being divided into two sub-bands (88, 86; 90, 92), the central sub-bands (86, 90) being used for mesh-type emission and the end sub-bands for star-type emissions, the two central sub-bands also being used for mesh-type reception for both groups of terminals.

2. A system according to claim 1, **characterized in that** the two band parts are equal.

3. A system according to claim 1 or 2, **characterized in that** the two sub-bands of a part of the band are of unequal widths.

4. A system according to claim 3, **characterized in that** the sub-band intended for mesh reception is less wide than the sub-band intended for star-configuration emission.

5. A system according to claim 4, **characterized in that** the width of the two central sub-bands together is less than the width of the less wide of the end bands.

6. A terminal for a telecommunication system, wherein digital communications are transmitted in multi-frequency time division multiple access mode (MF-TDMA), wherein each terminal can communicate with the other terminal either in a mesh configuration, directly from terminal to terminal, or in a star configuration, by means of a base station, a frequency band being allocated to the system, **characterized in that**, the frequency band being divided into two distinct parts, the terminal comprises means for emitting on one of the two parts of the frequency band, that part being divided into two sub-bands of which the one closer to the other part is intended for mesh-type emission and of which the other sub-band is intended for star-type emissions, and **in that** for mesh-type reception, the terminal comprises means for receiving using the mesh-type emission sub-band and using the adjacent sub-band, also intended for mesh-type emission, but for the second part of the band.

7. A terminal according to claim 6, **characterized in that** the two parts of the band are equal.

8. A terminal according to claim 6 or 7, **characterized in that** the two sub-bands are unequal.

9. A terminal according to claim 8, **characterized in that** the sub-band intended for mesh-type emission is less wide than the sub-band intended for star-configuration emission.

10. A terminal according to any of the claims 6 to 9, **characterized in that** the band intended for mesh-type reception is less wide than the band intended for star-configuration emission.

## Patentansprüche

1. Telekommunikationssystem, insbesondere über einen transparenten Satelliten, wobei digitale Kommunikationen im Mehrfrequenz- und Zeitmultiplexmodus (MF-TDMA) übertragen werden, wobei das besagte System eine Vielzahl von Endgeräten und eine Basisstation umfasst, wobei die Kommunikationen sternartig über eine Basisstation (20) oder maschenartig direkt zwischen Endgeräten erfolgen können, **dadurch gekennzeichnet, dass** die Endgeräte in zwei Gruppen (29, 31) aufgeteilt sind, und dass das dem System zugeteilte Frequenzband (80) in zwei Abschnitte (82, 84) unterteilt ist; wobei der erste Abschnitt für die Übertragungen der ersten Gruppe und der zweite Abschnitt für die Übertragungen der zweiten Gruppe vorgesehen ist, wobei jeder Abschnitt des Frequenzbands in zwei Teilbänder (88, 86; 90, 92) unterteilt ist, wobei die mittleren Teilbänder (86, 90) für die maschenartige Übertragung und die äußeren Teilbänder für die sternartige Übertragung verwendet werden, wobei die beiden mittleren Teilbänder ebenfalls für den maschenartigen Empfang für alle Endgeräte der beiden Gruppen verwendet werden.

2. System nach Anspruch 1, **dadurch gekennzeichnet, dass** die beiden Bandabschnitte gleich sind.

3. System nach Anspruch 1 oder 2, **dadurch gekennzeichnet, dass** die beiden Teilbänder eines Bandabschnitts ungleiche Breiten aufweisen.

4. System nach Anspruch 3, **dadurch gekennzeichnet, dass** die Breite des für den maschenartigen Empfang vorgesehenen Teilbands kleiner als die Breite des für die sternartige Übertragung vorgesehenen Teilbands ist.

5. System nach Anspruch 4, **dadurch gekennzeichnet, dass** die Breite der gesamten beiden mittleren Teilbänder kleiner als die Breite der kleinsten Breite der äußeren Bänder ist.

6. Endgerät für ein Telekommunikationssystem, wobei die digitalen Kommunikationen im Mehrfrequenz- und Zeitmultiplexmodus (MF-TDMA) übertragen werden, wobei jedes Endgerät entweder maschenartig, direkt von Endgerät zu Endgerät, oder sternartig über eine Basisstation mit den anderen Endgeräten kommunizieren kann, wobei dem System ein Frequenzband zugeteilt wird, **dadurch gekennzeichnet, dass** das Frequenzband in zwei unterschiedliche Abschnitte unterteilt ist, wobei das Endgerät Mittel zum Übertragen auf einem der beiden Abschnitte des Frequenzbands umfasst, wobei der besagte Abschnitt in zwei Teilbänder unterteilt ist, von denen das eine, welches dem anderen Abschnitt am nähesten liegt, für die maschenartige Übertragung vorgesehen ist und das andere Teilband für die sternartige Übertragung vorgesehen ist, und dass das Endgerät für den maschenartigen Empfang Mittel zum Empfangen gemäß dem maschenartigen Übertragungs-Teilband und gemäß dem benachbarten Teilband, welches ebenfalls für die maschenartige Übertragung, jedoch für den zweiten Bandabschnitt, vorgesehen ist, umfasst.

7. Endgerät nach Anspruch 6, **dadurch gekennzeichnet, dass** die beiden Bandabschnitte gleich sind.

8. Endgerät nach Anspruch 6 oder 7, **dadurch gekennzeichnet, dass** die beiden Teilbänder ungleich sind.

9. Endgerät nach Anspruch 8, **dadurch gekennzeichnet, dass** die Breite des für die maschenartige Übertragung vorgesehenen Teilbands kleiner als die Breite des für die sternartige Übertragung vorgesehenen Teilbands ist.

10. Endgerät nach einem beliebigen der Ansprüche 6 bis 9, **dadurch gekennzeichnet, dass** die Breite des für den maschenartigen Empfang vorgesehenen Bands kleiner als die Breite des für die sternartige Übertragung vorgesehenen Bands ist.
